# FASCICULE DE BREVET EUROPEEN

(11) **EP 0 587 488 B1**
(45) Date de publication et mention de la délivrance du brevet: **21.07.1999**
(21) Numéro de dépôt: 93402165.0
(22) Date de dépôt: 06.09.1993
(51) Int. Cl.: G06K 7/00, G06K 7/08, G06K 13/08

(54) **Dispositif de lecture de codes magnétiques et de codes optiques**
Magnetische und optische Koden-Leseeinrichtung
Device for reading magnetic and optic codes

(30) Priorité: 08.09.1992 FR 9210709
(43) Date de publication de la demande: 16.03.1994
(73) Titulaire: INTERNATIONALE DES JEUX, F-92643 Boulogne Billancourt Cédex (FR)
(72) Inventeur: Gatto, Jean-Marie, F-75016 Paris (FR); Bertrand, Dominique, F-75017 Paris (FR)
(74) Mandataire: Obolensky, Michel

(56) Documents cités:
- EP-A- 0 087 997
- EP-A- 0 278 195
- EP-A- 0 318 213
- EP-A- 0 357 827
- FR-A- 2 366 645
- US-A- 4 538 191
- US-A- 5 004 898

## Description

La présente invention est relative aux lecteurs de codes tels que des codes à barres ou des codes magnétiques placés sur des documents tels que des cartes, billets ou autres.

Un lecteur de codes magnétiques se présente souvent sous la forme d'un boîtier pourvu d'une fente destinée à recevoir des cartes magnétiques, une tête de lecture magnétique étant disposée dans la fente de manière à être mise en contact avec la carte magnétique à l'emplacement de celle-ci où les codes magnétiques sont enregistrés.

Un lecteur optique est généralement disposé à proximité d'un emplacement auquel des objets portant des codes à barres lui sont présentés.

Les lecteurs de codes magnétiques et optiques sont des dispositifs distincts qui sont généralement utilisés pour lire des informations de nature différente.

Ainsi un lecteur magnétique est le plus souvent utilisé pour la lecture de cartes de crédit telles que des cartes bancaires, des télécartes ou autres.

En revanche, le lecteur optique est davantage employé pour la lecture de codes désignant des produits vendus dans des magasins du type à grande surface ou analogues.

Dans le domaine des jeux de loterie, de loto ou autres, on peut se trouver dans la nécessité de lire à la fois des cartes magnétiques telles que des cartes de crédit en vue d'assurer un prélèvement d'un enjeu et d'enregistrer au moyen d'un lecteur optique le ou les numéros de billets codés en code à barres et correspondant par exemple à l'enjeu prélevé à l'aide de la carte magnétique.

On connaît d'après EP-A-0 357 827 un lecteur multiple pour cartes à bande magnétique, cartes à code barres optiques, cartes de microprocesseurs électroniques ayant une source de lumière et un détecteur à haute résolution pour rayons réfléchis par la carte. Ce lecteur comporte une fente pour l'introduction des cartes dans le lecteur, ladite fente étant reliée à un plan de support ayant une rainure pour faciliter l'introduction et le retrait de la carte, un ensemble d'éléments spécifiques pour lire la bande magnétique, des codes à barres, le microprocesseur électronique comprenant jusqu'à seize connexions de contact et une source de lumière avec un détecteur à haute résolution pour identifier le rayon réfléchi par la carte, un détecteur optique à infrarouges pour activer les éléments de lecture et les microprocesseurs électroniques des cartes et une carte à connexions multiples pour tous les contacts de tous les éléments de lecture en vue de la connexion du lecteur au terminal qui est actionné par l'introduction de la carte.

On connaît par ailleurs d'après EP-A-0 087 997 un dispositif de lecture et/ou d'écriture magnétique qui comporte une tête magnétique déplaçable par rapport à des moyens de support fixes pour laisser dans la fente d'introduction d'un support magnétique un intervalle en l'absence dudit support, inférieur à son épaisseur pour permettre l'application de la tête magnétique contre le support lors de son introduction dans la fente.

L'invention vise à créer un lecteur qui soit capable de lire aussi bien un code magnétique qu'un code optique.

Elle a donc pour objet un dispositif de lecture de codes magnétiques portés par des supports, tels que des cartes, d'une épaisseur déterminée et de codes optiques imprimés sur des supports de plus faible épaisseur, caractérisé en ce qu'il comporte, montées dans des parois opposées d'une fente commune d'une largeur légèrement supérieure à l'épaisseur d'une carte magnétique, une tête de lecture magnétique associée à des moyens élastiques d'application de la tête magnétique contre les pistes magnétiques de la carte, et une tête de lecture optique, des moyens pour limiter en l'absence de carte magnétique, l'engagement de la tête de lecture magnétique dans la fente sur une partie de la largeur de celle-ci afin de laisser entre la tête magnétique et la tête de lecture optique opposée à celle-ci, un intervalle suffisant pour le passage d'un support de codes optiques, et des moyens de reconnaissance des signaux de sorties de la tête de lecture magnétique ou de la tête de lecture optique.

L'invention sera mieux comprise à l'aide de la description qui va suivre, donnée uniquement à titre d'exemple et faite en se référant aux dessins annexés, sur lesquels :
- la Fig.1 est une vue schématique en coupe d'un premier mode de réalisation d'un lecteur magnéto-optique suivant l'invention;
- la Fig.2 est un vue en coupe analogue à celle de la Fig.1 représentant une variante du lecteur magnéto-optique; et
- la Fig.3 est un organigramme d'un mode de détermination de la nature des signaux délivrés par le lecteur magnéto-optique suivant l'invention.

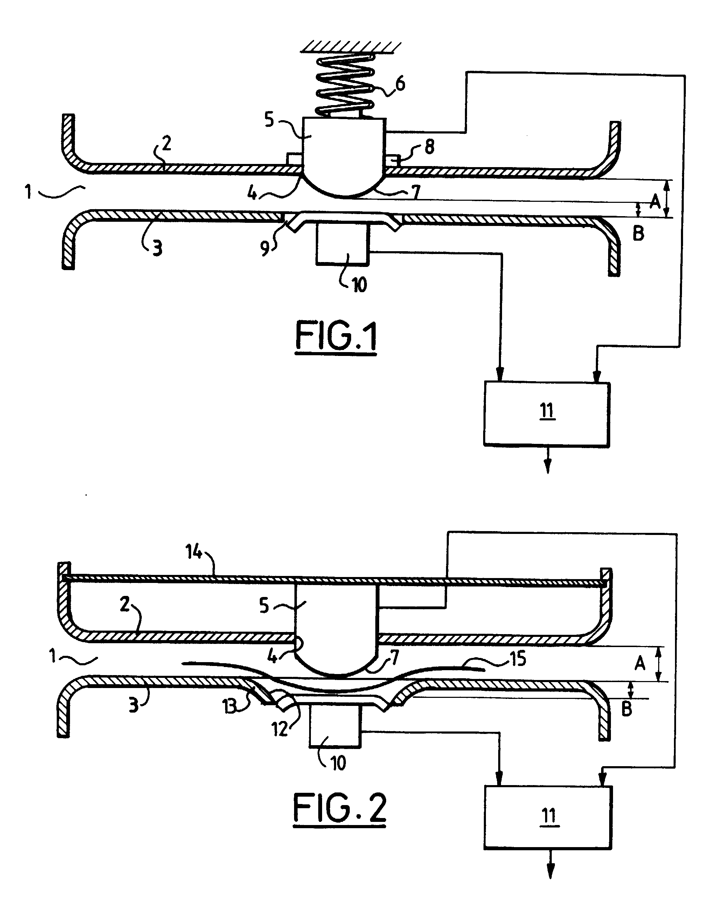

Sur la Fig.1, on a représenté schématiquement en coupe une fente 1 de réception de supports de codes magnétiques réalisés généralement sous la forme de cartes d'épaisseur A et de supports de codes optiques de plus faible épaisseur et constitués quelquefois par des feuilles de papier ou autres sur lesquelles sont imprimés les codes à barre.

La fente 1 est délimitée par deux parois opposées 2 et 3.

Dans la paroi 2, est ménagé un orifice 4 dans lequel est montée une tête de lecture magnétique 5 sollicitée vers l'intérieur de la fente par un ressort 6 et présentant une extrémité 7 opposée au ressort, de forme arrondie permettant l'effacement de la tête lors de l'introduction d'une carte d'épaisseur A (non représentée) et l'application de celle-ci sous l'effet du ressort 6 contre les pistes magnétiques portées par la carte.

L'engagement de la tête magnétique 5 dans la fente 1, est limité à une valeur inférieure à la largeur A de la fente par une butée 8 coopérant avec la paroi 2 de la fente.

Dans la paroi 3, de la fente 1 oppposée à la paroi 2, est ménagé un autre orifice 9 dans lequel est disposée de façon fixe une tête de lecture optique 10, de manière à affleurer le bord intérieur de la paroi 3.

Ainsi, entre l'extrémité arrondie 7 de la tête magnétique et la paroi 3 de la fente opposée à la paroi 2, est ménagé un intervalle de largeur B qui permet lorsque la tête magnétique n'est pas utilisée le libre passage dans la fente d'un support de code optique de faible épaisseur et la lecture des codes à barres qu'il porte par la tête de lecture optique 10.

Selon un autre mode de réalisation, la tête magnétique 5 peut être montée sur la paroi au moyen d'un ressort à lame qui assure simultanément la fonction d'application de la tête de lecture 5 contre les pistes magnétiques de la carte et de limitation de l'engagement de la tête magnétique dans la fente 1 en l'absence de carte magnétique pour définir entre la tête de lecture magnétique et la tête de lecture optique 10, affleurant le bord intérieur de la paroi 3 un intervalle de largeur B pour l'introduction d'un support de code optique.

La tête magnétique 5 et la tête de lecture optique 10 sont toutes deux reliées à un circuit 11 tel qu'un microprocesseur faisant partie d'une installation équipée de la tête magnéto-optique suivant l'invention et destiné à reconnaître les signaux de sortie de l'une ou l'autre de ces têtes en vue de permettre un traitement ultérieur approprié des signaux.

Sur la Fig.2, on a représenté une variante du lecteur magnéto-optique suivant l'invention.

Dans cette variante, dont les éléments correspondants à ceux de la Fig.1 portent les mêmes numéros de référence, la fente 1 est également délimitée par des parois 2 et 3.

Dans la paroi 2, est ménagé un orifice 4 livrant passage à une tête de lecture magnétique 5.

Dans la paroi 3 de la fente opposée à la paroi 2, est en revanche ménagé un orifice 12 qui diffère de l'orifice 9 ménagé dans la paroi 3 du mode de réalisation de la Fig.1, en ce qu'il comporte des bords 13 arrondis pour permettre le positionnement d'une tête de lecture optique 10 légèrement en retrait par rapport au bord intérieur de la paroi 3.

La tête magnétique 5 est reliée à la paroi 2 de la fente 1 par une lame élastique 14 qui assure l'escamotage de la tête magnétique 5 lors de l'introduction d'une carte dans la fente 1 et l'application de la tête contre les pistes magnétiques de la carte.

En revanche, en l'absence de carte magnétique, la lame élastique 14 ramène la tête magnétique 5 dans une position de repos dans laquelle son extrémité arrondie 7 vient au niveau du bord intérieur de la paroi 3 de la fente dans laquelle est disposée la tête de lecture optique 10. Cependant, du fait que la tête de lecture optique est montée légèrement en retrait par rapport au bord intérieur de la paroi 3, un intervalle de largeur B est ménagé entre la tête magnétique 5 et la tête de lecture optique 10 pour le passage d'un support de code optique constitué par exemple par une feuille souple 15.

En fait, la position relative des têtes magnétique et optique 5 et 10 délimite dans ce mode de réalisation une chicane pour le passage du support de codes optiques souple.

Enfin, la variante de la Fig.2 comporte également un circuit 11 de reconnaissance des signaux de sortie des têtes de lecture magnétique et optique.

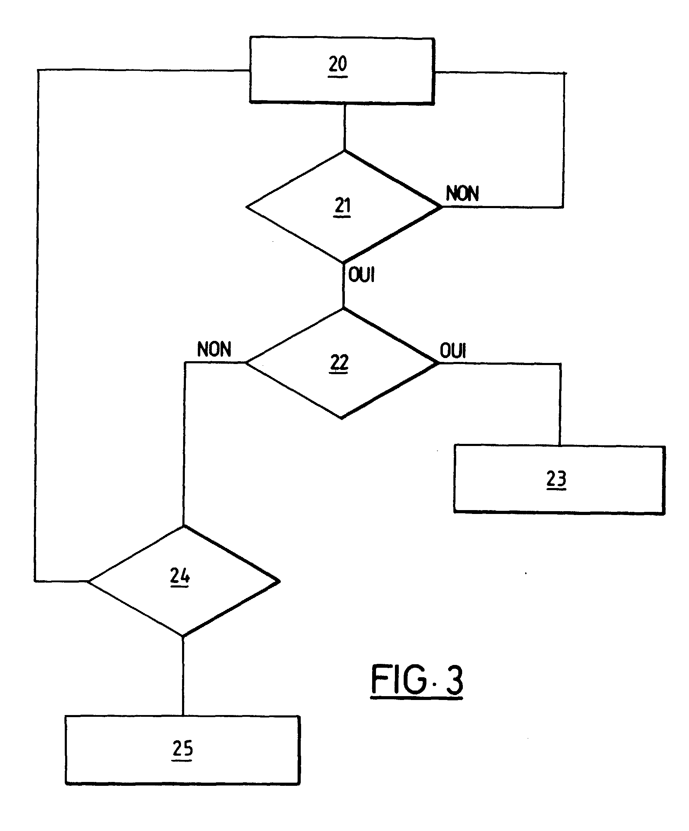

L'organigramme de la Fig.3 illustre un mode de reconnaissance de la nature des signaux émis par le dispositif lecture magnéto-optique suivant l'invention.

Au cours d'une phase 20, on procède d'abord à une lecture à l'aide du lecteur optique 10. La phase suivante 21 consiste à déterminer si un support de codes quelconque est présent ou non dans la fente 1. En cas d'absence de ce support, on revient à la phase 20.

Si un support est détecté dans la fente, au cours de la phase 22, on détermine s'il s'agit d'une carte magnétique.

Dans l'affirmative, on déclenche au cours de la phase 21, un traitement des signaux magnétiques.

Dans le cas contraire, on détermine au cours de la phase 24, si le support présent dans la fente 10 est un support de code optique.

Dans la négative, on revient à la phase 20.

Dans l'affirmative, on procède au cours de la phase 25 au traitement des signaux optiques.

Bien entendu, la désignation de la nature des signaux émis par le dispositif de lecture magnéto-optique et le traitement de ces signaux, sont effectués dans le circuit 11 associé à ladite tête.

Un dispositif de lecture de codes magnétiques et de codes optiques, du type décrit plus haut, peut avoir des applications les plus diverses qui ne sont bien entendu pas limités aux terminaux de jeu.

## Revendications

1. Dispositif de lecture de codes magnétiques portés par des supports, tels que des cartes, d'une épaisseur déterminée et de codes optiques imprimés sur des supports de plus faible épaisseur, caractérisé en ce qu'il comporte, montées dans des parois opposées (2,3) d'une fente commune d'une largeur légèrement supérieure à l'épaisseur d'une carte magnétique, une tête (5) de lecture magnétique associée à des moyens élastiques (6;14) d'application de la tête magnétique (5) contre les pistes magnétiques de la carte, et une tête (10) de lecture optique, des moyens (8;14) pour limiter en l'absence de carte magnétique, l'engagement de la tête de lecture magnétique dans la fente (1) sur une partie de la largeur de celle-ci afin de laisser entre la tête magnétique et la tête de lecture optique opposée à celle-ci, un intervalle (B) suffisant pour le passage d'un support de codes optiques, et des moyens (11) de reconnaissance des signaux de sorties de la tête (5) de lecture magnétique ou de la tête (10) de lecture optique.

2. Dispositif suivant la revendication 1, caractérisé en ce que les moyens élastiques sont constitués par un ressort (6) de sollicitation de la tête de lecture magnétique (5) vers l'intérieur de la fente (1) et les moyens de limitation de l'engagement de la tête de lecture magnétique dans la fente (1) sont constitués par une butée (8), portée par la tête (5) de lecture magnétique et coopérant avec une paroi (2) de la fente (1) dans laquelle la tête (5) de lecture magnétique est montée déplaçable.

3. Dispositif suivant l'une des revendications 1 et 2, caractérisé en ce que la tête (10) de lecture optique est montée dans un orifice (9) ménagé dans la paroi (3) correspondante et affleure le bord intérieur de ladite paroi.

4. Dispositif suivant la revendication 1, caractérisé en ce que les moyens élastiques et les moyens de limitation de l'engagement de la tête (5) de lecture magnétique dans la fente (1) sont constitués par un ressort à lame (14) au moyen duquel la tête (5) de lecture magnétique est fixée sur la paroi (2) de la fente (1), et montée déplaçable dans un orifice (4) de ladite paroi.

5. Dispositif suivant l'une des revendications 1 à 4, caractérisé en ce que la tête (10) de lecture optique est montée dans un orifice (12) de la paroi (3) correspondante de la fente (1) légèrement en retrait par rapport au bord intérieur de ladite paroi, la position relative des têtes de lecture magnétique et optique (5,10) délimitant une chicane pour le passage du support de code optique.

## Patentansprüche

1. Vorrichtung zum Lesen von Magnetkodes, die von Trägern wie Karten von einer bestimmten Dicke getragen werden, und von optischen Kodes, die auf Träger von geringerer Dicke aufgedruckt sind, dadurch gekennzeichnet, daß sie einen Magnetlesekopf (5), dem elastische Mittel (6; 14) zum Anlegen des Magnetkopfs (5) an die Magnetspuren der Karte zugeordnet sind, und einen optischen Lesekopf (10) aufweist, wobei diese Köpfe in einander entgegengesetzten Wänden (2, 3) eines gemeinsamen Schlitzes montiert sind, dessen Breite etwas größer als die Dicke einer Magnetkarte ist, sowie Mittel (8; 14) zur Begrenzung des Eintretens des Magnetlesekopfs in den Schlitz (1) auf einem Teil seiner Breite bei Nichtvorhandensein einer Magnetkarte, um zwischen dem Magnetkopf und dem diesem entgegengesetzten optischen Lesekopf einen Zwischenraum (B) zu belassen, der für den Durchgang eines Trägers von optischen Kodes ausreicht, und Mittel (11) zum Erkennen der Ausgangssignale des Magnetlesekopfs (5) oder des optischen Lesekopfs (10).

2. Vorrichtung nach Anspruch 1, dadurch gekennzeichnet, daß die elastischen Mittel aus einer Feder (6) zur Belastung des Magnetlesekopfs (5) auf das Innere des Schlitzes (1) zu bestehen und die Mittel zur Begrenzung des Eintretens des Magnetlesekopfs in den Schlitz (1) aus einem von dem Magnetlesekopf (5) getragenen Anschlag (8) bestehen, der mit einer Wand (2) des Schlitzes (1) zusammenwirkt, in der der Magnetlesekopf (5) beweglich montiert ist.

3. Vorrichtung nach einem der Ansprüche 1 und 2, dadurch gekennzeichnet, daß der optische Lesekopf (10) in einer in der entsprechenden Wand (3) vorgesehenen Öffnung (9) montiert ist und mit dem Innenrand dieser Wand bündig ist.

4. Vorrichtung nach Anspruch 1, dadurch gekennzeichnet, daß die elastischen Mittel und die Mittel zur Begrenzung des Eintretens des Magnetlesekopfs (5) in den Schlitz (1) aus einer Blattfeder (14) bestehen, mit deren Hilfe der Magnetlesekopf (5) an der Wand (2) des Schlitzes (1) befestigt ist und in einer Öffnung (4) dieser Wand beweglich montiert ist.

5. Vorrichtung nach einem der Ansprüche 1 bis 4, dadurch gekennzeichnet, daß der optische Lesekopf (10) in einer Öffnung (12) der entsprechenden Wand (3) des Schlitzes (1) bezüglich des Innenrandes dieser Wand leicht zurückversetzt montiert ist, wobei die Stellung des Magnetlesekopfs (5) und des optischen Lesekopfs (10) zueinander eine Umlenkung des Durchgangs des Trägers der optischen Kodes erzeugt.

## Claims

1. Device for reading magnetic codes carried by carriers, such as cards, of a predetermined thickness and of optical codes printed on carriers of a lesser thickness, characterised in that it comprises, mounted in the opposite walls (2, 3) of a common slot of a size slightly greater than the thickness of a magnetic card, a magnetic reading head (5) associated with elastic means (6; 14) for urging the magnetic head (5) against the magnetic tracks on the card, and an optical reading head (10), means (8; 14) for limiting, in the absence of the magnetic card, the entry of the magnetic reading head into the slot (1) to a part of the size of the latter with the aim of leaving between the magnetic head and the optical reading head opposite it a gap ( B) sufficient for the passage of an optical code carrier, and means (11) for recognising the output signals from the magnetic reading head (5) or the optical reading head (10).

2. Device according to claim 1, characterised in that the elastic means are constituted by a spring (6) urging the magnetic reading head (5) towards the interior of the slot (1) and the means for limiting the entry of the magnetic reading head into the slot (1) are constituted by a stop (8), carried by the magnetic reading head (5) and co-operating with a wall (2) of the slot (1) in which the magnetic reading head (5) is displaceably mounted.

3. Device according to one of claims 1 and 2, characterised in that the optical reading head (10) is mounted in an opening (9) provided in the corresponding wall (3) and flush with the inner face of the said wall.

4. Device according to claim 1, characterised in that the elastic means and the means for limiting the entry of the magnetic reading head (5) into the slot (1) are constituted by a leaf spring (14) by means of which the magnetic reading head (5) is mounted on the wall (2) of the slot (1), and mounted displaceably in an opening (4) in the said wall.

5. Device according to one of claims 1 to 4, characterised in that the optical reading head (10) is mounted in an opening (12) in the corresponding wall (3) of the slot (1) slightly set back with respect to the inner face of the said wall, the relative position of the magnetic and optical reading heads (5, 10) defining a chicane for the passage of the optical code carrier.
